# EUROPEAN PATENT APPLICATION

(11) **EP 0 926 861 A1**
(43) Date of publication of application: **30.06.1999**
(21) Application number: 97650057.9
(22) Date of filing: 22.12.1997
(51) Int. Cl.: H04L 12/58

(54) **A messaging system**

(71) Applicant: E-Mail Design Limited, Dublin 18 (IE)
(72) Inventor: Neavyn, Denis, Stillorgan, County Dublin (IE); Mills, Jonathan, Dun Laoghaire, County Dublin (IE)
(74) Representative: O'Brien, John Augustine

(57) **Abstract**

Client systems 1 establish connections with a messaging system (10) at a client interface (20, 21, 22, 23) and messages are routed to a communications controller (23). The system (10) has a network (30) to which a separate message server (31) is connected. The communications controller (23) and the message server (31) have incompatible protocols and cannot directly communicate. Messages are transferred via a virtual communications drive (32). A configuration database (CDB, 34) indicates client-specific processing function including journalling and virus scanning.

## Description

The invention relates to communication of messages between multiple client systems and external systems.

In recent years, there has been a phenomenal growth in both the volume of non-paper message transmission such as by fax and e-mail, and also in the number of different messaging services which can be utilised. For example, there are many different standards for e-mail communication and also many different message-processing applications for client systems.

While major technological advances have been made to support such communication, one of the problems which has arisen is a client concern about the level of control, particularly for large clients such as organisations having many employees who have access to a messaging system. One concern is that there may be viruses on incoming messages. Another is that there may be inadequate procedures for maintaining records of messages which have been sent. For example, there may be important legal/contractual consequences if inadequate records are kept. A still further concern is the level of technical backup required by a client in order to maintain systems up-to-date.

The prior art includes many messaging systems which provide various functions, most of which appear to operate well. For example, PCT Specification No. WO 94/14258 (The Commonwealth of Australia) describes a system having a trusted sealing device which associates a seal with a message for security purposes. European Patent Specification No. EP 0777394 (Alcatal) describes an internet to GSM SMSC system in which data blocks are embedded for compatibility. United States Patent Specification No. US 5406557 (NSC) describes a system which is particularly useful for a single client in which messages are converted to a flat format to allow re-routing to other services. United States Patent Specification No. US 5577202 (TRW) describes a gateway system for compatibility between different messaging protocols. United States Patent Specification No. US5604788 (Motorola) describes a messaging system in which there is wireless communication.

All of the above systems are undoubtedly effective for the particular applications and problems which they address. However, there is still a need for a messaging system which can be used by a large number of clients to provide messaging services in a manner whereby:-
client-specific message processing services can be set up in a very simple and flexible manner;
a wide range of such message processing services can be provided;
the risk of security loss in message transfer is extremely low, despite there being a large number of client systems connected; and
system response time is relatively short, to the extent of total message processing being complete in less than three minutes.

It is therefore an object of the invention to provide such a messaging system for communication between a number of client systems and external systems in a manner whereby there is little technical support required by the clients.

According to the invention, there is provided a messaging system comprising a client interface for communication with client systems, an external interface for communication with external systems, and a message processing means connected to the interfaces and comprising means for performing bi-directional switching and processing of messages, characterised in that, the processing means comprises a network to which are connected discrete message processing devices including:-
a communications controller connected to the client interface and comprising incoming and outgoing mailbox memory sections for each client system;
a separate and discrete message server programmed with a communication protocol which is incompatible with a protocol of the communications controller to prevent direct peer-to-peer communication between the communications controller and the server, and wherein the communications controller and the server comprise means for performing file exchange access to a virtual communications drive for message routing with client system isolation from the server.

By separating the communications and server functions in this manner, the advantages of distribution of the message-processing tasks is achieved, together with isolation of the client system from the "external world" in a simple manner.

In one embodiment, the communications controller comprises means for writing incoming messages to a generic external mail queue, and for periodically polling the queue and transmitting the messages to the virtual communications drive. This is a simple and effective message interfacing and file transfer mechanism.

In another embodiment, the communications controller and the server are connected to a local area network, and the virtual communications drive is directly connected to the server.

Preferably, the server comprises means for establishing a logical network with virtual drives mapped to physical drives, and the communications controller comprises means for logging into the logical network when off-line and establishing a connection to the virtual drive.

In one embodiment, the server comprises means for periodically searching the virtual communications drive for incoming files and for importing any such files to the server using special conversion channels performing protocol conversion. This is a simple and effective way of retrieving mail messages.

Preferably, the message server is connected to a configuration database storing client-specific functions for processing of messages. This is also a very effective way of distributing the processing functions in the system and allowing easy maintenance. Preferably, the functions include journalling and virus scanning.

In one embodiment, the system further comprises a dedicated virus scanning device connected to the network and the server comprises means for activating the virus scanning device according to entries in the configuration database. This allows isolation of the virus scanning function and it also allows the function to be carried out efficiently.

In one embodiment, the virus scanning device comprises means for copying each message, decomposing each message into a header and a body part and individually scanning the header and body part. This has been found to be a very effective virus scanning technique, and because it is carried out by a dedicated device the operations are efficient.

In another embodiment, the server comprises a reverse database storing externally-recognisable addressor client addresses cross-referenced to original client addresses, and the server comprises means for automatically inserting the externally-recognisable client addresses in outgoing messages.

Preferably, the server is connected to a mappings database and comprises means for accessing the mappings database and for automatically processing outgoing messages according to entries in the mappings database.

In one embodiment, the server comprises means for generating a mime compliant message by constructing an envelope, headers, and a body part and for labelling and encoding the body part according to entries in the mappings database.

Preferably, the server comprises means for automatically transmitting a message back to an addressor with instructions for recordal in a journal storage device if a journalling function is indicated by the configuration database.

In one embodiment, the client interface comprises a bank of telecommunications lines connected to modems which are in turn connected to expander circuits.

Preferably, the expander circuits are programmed to group the lines by service in hunt groups with a lead number which access the modems.

The invention will be more clearly understood from the following description of some embodiments thereof, given by way of example only with reference to the accompanying drawings in which:
Fig. 1 is a schematic representation of a messaging system of the invention; and
Figs. 2 and 3 are flow diagrams illustrating operation of the messaging system.

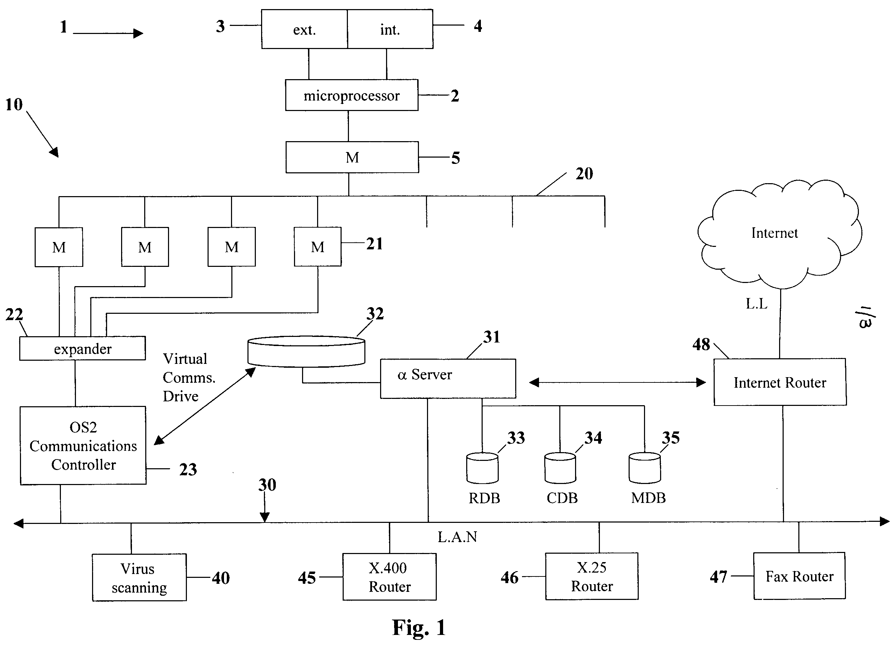

Referring to the drawings, and initially to Fig. 1, there is illustrated a client system 1 having a processor 2 connected to an external mailbox 3 and to an internal mailbox 4 mapped on disk. The processor 2 is also connected to a modem 5 via a dedicated PSTN line for asynchronous communication with a messaging system 10 of the invention.

The system 10 comprises a client interface comprising a bank of PSTN lines 20 connected to modems 21 which are in turn connected to expander circuits 22, only one of which is shown. All of the incoming PSTN lines 20 are grouped by service in hunt groups of eight with a lead number which access the modems 21. This allows redundancy to help ensure reliable first-time connection, and also expansion. All of the modems 21 use standard scripts to cater for connection from a large variety of client modem types.

Each bank of eight expander circuits 22 is connected to a single communications controller 23. In this embodiment each controller 23 is a microcomputer having conventional hardware and programmed for communication control. The disk of each controller 23 is mapped with a mailbox structure in which there is an individual mailbox associated with each client system 1, and each such mailbox has incoming and outgoing message sections.

The communications controller 23 is connected to a local area network 30, to which a message server 31 is also connected. The message server 31 operates on a different operating system to the communications controllers 23. The communications controllers operate on the OS 2™ and NT™ operating systems, whereas the server 31 operates on the OpenVms™ operating system. Also, the processors are not programmed to address each other and there are no protocols in place which would allow direct peer-to-peer communication.

The server 31 is connected to a virtual communications drive 32, a reverse database (RDB) 33, a configuration database (CDB) 34, and a mapping database (MDB) 35. The communications controller 23 and the server 31 are programmed for access to the virtual communications drive 32 in a file exchange mechanism.

The messaging system 10 also comprises a virus scanning system 40, also directly connected to the network 30.

Finally, the messaging system 10 comprises various routers for connection with external systems. These include an X.400 router 45, an X.25 router 46, a fax router 47, and an Internet router 48.

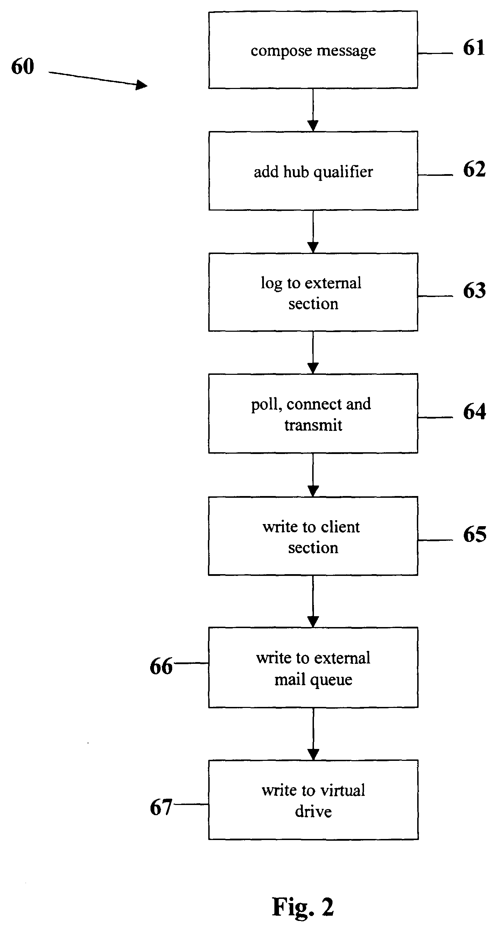

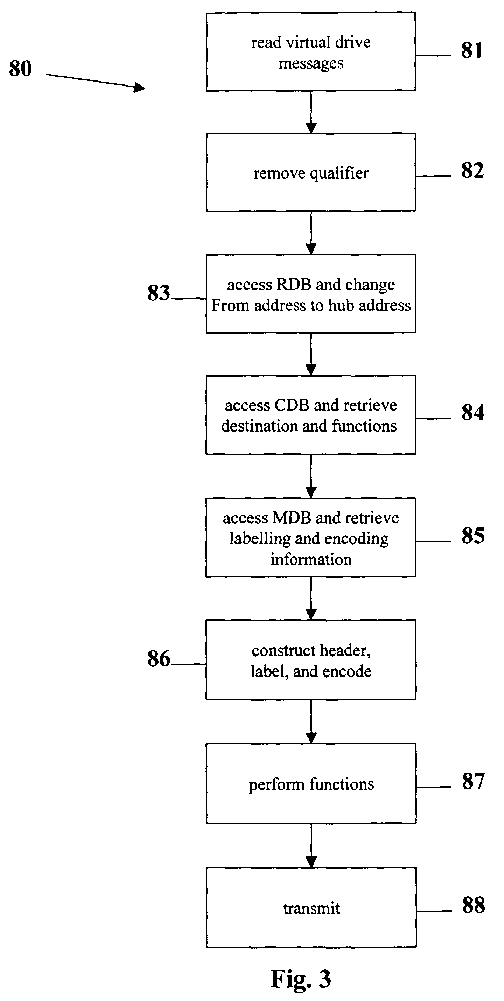

Referring now to Figs. 2 and 3, the manner in which the system 10 operates is now described in detail. Firstly, a method 60 is described whereby a message is transmitted from a client system 1 to the communications controller 23. This method is indicated by the numeral 60 in Fig. 2. In step 61, the user composes a message, say an electronic mail message, at the client system 1. A qualifier is added to the addressee address (referred to as the "To" address) in step 62. In this embodiment the qualifier is "SMTP" which is an anagram for Simple Message Transfer Protocol. In step 63 the message is transmitted to the messaging system 10. The processor 2 polls the external section 3 in step 64 at a configurable time base interval, establishes a connection to the messaging system 10 at the PSTN lines 20, and transmits the message.

One of the communications controllers 23 receives the message and automatically identifies the source of the message and writes it in step 65 to a generic external mail queue on its disk drive. In step 66, the processor of the controller 23 polls the generic external mail queue an exports any new messages. New messages are transmitted in step 67 via the network 30 to the virtual communications drive 32 connected to the server 31. This transfer is performed by the controller 23 operating in batch mode with "sleep" intervals between loops. The external mail queue is exported and its contents are written to a file on the virtual drive 32. The route is via the network 30 and the server 31 using the file transfer protocols. Isolation of the server 31 from the client systems 1 is ensured because the server 31 sets up a logical network with virtual drives which are mapped to physical drives on the server 31. Each communications controller 23 is configured to log into this network and establish a connection to the virtual drive 32. Also, the import/export operations via the virtual drive 31 happens off-line and so there is never a live connection from the client system 1 to the virtual drive 32.

The transfer to the virtual drive 32 is very important as it allows the transfer of messages for handling by the server 31 in a way which isolates the server 31 from the client systems. The server 31 can access the messages on the drive 32 by operating in batch mode at regular, programmable time intervals. The drive 32 is searched for incoming files and these are imported into the server 31 using special conversion channels. These channels are used for both imports and exports for message format conversion.

Referring to Fig. 3, a method 80 is illustrated whereby the server 31 processes received messages. The virtual drive 32 is read by the server 31 in step 81 and in step 82 the SMTP qualifier is removed. In step 83 the server 31 accesses the RDB 33 from which it retrieves a hub "From" address for the message. The hub From address includes a portion which identifies the hub (messaging system 10). An example of an original From address is msmailpo/msnet/jsmith@msmail.team400.ie and of a hub From address is jsmith@companyname.team400.ie. It is this address which is recognisable to external systems.

The CDB 34 is accessed in step 84 to retrieve the destination and the client-specific functions. These functions are described in more detail below.

The server 31 then builds a mime message by constructing an envelope and subsequent headers followed by the body part of the message. If the body part is pure text it is not changed. However, if it is a file attachment or other non-ASCII data, the server 31 labels and encodes it. The server 31 accesses the MDB 35 in step 85 to determine how the data should be labelled and encoded. Entries exist in the MDB 35 for most channels which correspond to input streams. These mapping entries allow the server 31 to construct a fully mime compliant message. It then encodes in step 86 and outputs a mime compliant mail message for onward delivery.

An important aspect of the CDB 34 is that it indicates to the processor the functions which are to be carried out. These functions are client-specific and therefore the primary key for access to the CDB 34 is a client identifier which is retrieved from the To address. An example is Jsmith@xyz.securemail.ie.

These functions include:-
Virus scanning. In the messaging system 10, if the destination is another client who has subscribed to a virus scanning service, the scanning takes place. Scanning is performed by the dedicated virus scanning system 40 which operates by decomposing the messages as follows. A copy of the message is taken. The system 40 decomposes the message into header and body part(s). The header and each part is scanned for viruses. Assuming no virus is found, the original message is delivered and the copy is deleted. If a virus is found, the message is stored in a quarantine memory section and a warning message is sent to the server 31.
Aliasing. The CDB is indexed on the To address field of a message. The server 31 checks the To address on all messages. Where a match is found in the alias file, the To address is rewritten and the message is delivered to the new To address.
Journalling. Again, this is a client-specific service in which the server 31 automatically transmits a copy of the outgoing message back to the addressor.
The client system 1 receives the duplicate copy in a designated mailbox called 'Journal'. The messages from these mailboxes are exported locally and built into a database for future lookups.

In step 87, the processor carries out the client-specific functions which are indicated by the CDB 34 and in step 88 the processed message is transmitted via one of the routers 45, 46, 47, or 48 as appropriate.

For incoming messages from external systems, the server 31 receives the messages via one of the routers and accesses the CDB 34 to determine which client-specific functions are required. For example, there may be virus scanning by the system 40 if this is a service requested by the particular client. Processed messages are written to the virtual drive 32 and are then subsequently accessed by the retrieval process in the communications controller 23.

The invention is not limited to the embodiments described but may be varied in construction and detail within the scope of the claims.

## Claims

1. A messaging system comprising a client interface for communication with client systems, an external interface for communication with external systems, and a message processing means connected to the interfaces and comprising means for performing bi-directional switching and processing of messages, characterised in that, the processing means comprises a network (30) to which are connected discrete message processing devices including:-
a communications controller (23) connected to the client interface (20, 21, 22, 23) and comprising incoming and outgoing mailbox memory sections for each client system;
a separate and discrete message server (31) programmed with a communication protocol which is incompatible with a protocol of the communications controller to prevent direct peer-to-peer communication between the communications controller (23) and the server (31), and wherein the communications controller (23) and the server (31) comprise means for performing file exchange access to a virtual communications drive for message routing with client system isolation from the server.

2. A messaging system as claimed in any preceding claim, wherein the communications controller comprises means for writing incoming messages to a generic external mail queue, and for periodically polling the queue and transmitting the messages to the virtual communications drive.

3. A messaging system as claimed in claim 1 or 2, wherein the communications controller and the server are connected to a local area network, and the virtual communications drive is directly connected to the server.

4. A messaging system as claimed in claim 3, wherein the server comprises means for establishing a logical network with virtual drives mapped to physical drives, and the communications controller (23) comprises means for logging into the logical network when off-line and establishing a connection to the virtual drive (32).

5. A messaging system as claimed in any preceding claim, wherein the server comprises means for periodically searching the virtual communications drive for incoming files and for importing any such files to the server using special conversion channels performing protocol conversion.

6. A messaging system as claimed in any preceding claim, wherein the message server (31) is connected to a configuration database (34) storing client-specific functions for processing of messages.

7. A messaging system as claimed in claim 6, wherein the functions include journalling and virus scanning.

8. A messaging system as claimed in claim 7, wherein the system further comprises a dedicated virus scanning device connected to the network and the server comprises means for activating the virus scanning device according to entries in the configuration database.

9. A messaging system as claimed in claim 8, wherein the virus scanning device comprises means for copying each message, decomposing each message into a header and a body part and individually scanning the header and body part.

10. A messaging system as claimed in any preceding claim, wherein the server comprises a reverse database storing externally-recognisable addressor client addresses cross-referenced to original client addresses, and the server comprises means for automatically inserting the externally-recognisable client addresses in outgoing messages.

11. A messaging system as claimed in any preceding claim, wherein the server is connected to a mappings database and comprises means for accessing the mappings database and for automatically processing outgoing messages according to entries in the mappings database.

12. A messaging system as claimed in claim 11, wherein the server comprises means for generating a mime compliant message by constructing an envelope, headers, and a body part and for labelling and encoding the body part according to entries in the mappings database.

13. A messaging system as claimed in any preceding claim, wherein the server (31) comprises means for automatically transmitting a message back to an addressor with instructions for recordal in a journal storage device if a journalling function is indicated by the configuration database.

14. A messaging system as claimed in any preceding claim, wherein the client interface comprises a bank of telecommunications lines connected to modems which are in turn connected to expander circuits, and wherein the telecommunication lines are programmed to group the lines by service in hunt groups with a lead number which access the modems.
